Europäisches Patentamt

European Patent Office

Office européen des brevets

(11) Numéro de publication: **0 418 115 A1**

(12) **DEMANDE DE BREVET EUROPEEN**

(21) Numéro de dépôt: **90402412.2**

(22) Date de dépôt: **31.08.90**

(51) Int. Cl.⁵: **B62D 7/14, B60G 7/02**

(30) Priorité: **12.09.89 FR 8911910**

(43) Date de publication de la demande:
**20.03.91 Bulletin 91/12**

(84) Etats contractants désignés:
**DE GB IT**

(71) Demandeur: **AUTOMOBILES PEUGEOT**
**75, avenue de la Grande Armée**
**F-75116 Paris(FR)**

Demandeur: **AUTOMOBILES CITROEN**
**62 Boulevard Victor-Hugo**

**F-92200 Neuilly-sur-Seine(FR)**

(72) Inventeur: **Sirou, Marc**
**18, Chemin des Mascadées**
**F-91310 Longpont Sur Orge(FR)**
Inventeur: **Galtier, Lucien**
**28 Rue de Favigny**
**F-91390 Morsang sur Orge(FR)**

(74) Mandataire: **Berger, Helmut et al**
**Cabinet Z. WEINSTEIN 20, avenue de**
**Friedland**
**F-75008 Paris(FR)**

(54) **Dispositif de commande de direction arrière pour véhicule automobile à quatre roues directrices.**

㊗ La traverse (2) de l'essieu arrière est montée pivotante par rapport à la caisse autour d'un point (10) situé au croisement de l'axe longitudinal du véhicule et de l'axe des roues arrière. A chaque extrémité de la traverse (2) des moyens (3) de vérin hydraulique de commande dudit mouvement de pivotement agissent sur un corps de liaison élastique entre la caisse et la traverse et sont disposés de façon à produire une force de pivotement perpendiculaire aux rayons du mouvement de pivotement.

Les moyens de vérin hydraulique (3) comportent un seul vérin (8) qui est incorporé au corps de liaison élastique (11) et forme avec celui-ci un ensemble dans lequel ce corps (11) est disposé entre la caisse (18) ou la traverse (2) et une partie du vérin, soit le piston (9), soit le corps de vérin (10), tandis que l'autre partie du vérin est fixée à la traverse (2) ou la caisse (18).

FIG. 1

DISPOSITIF DE COMMANDE DE DIRECTION ARRIÈRE POUR VÉHICULE AUTOMOBILE À QUATRE ROUES DIRECTRICES.

La présente invention concerne un dispositif de commande de direction arrière pour véhicule automobile à quatre roues directrices, dont la traverse de l'essieu arrière est montée pivotante par rapport à la caisse autour d'un point situé au croisement de l'axe longitudinal du véhicule et de l'axe des roues arrière, ce dispositif de commande comportant à chaque extrémité de la traverse des moyens de vérin hydraulique de commande dudit mouvement de pivotement, qui agissent sur un corps de liaison élastique entre la caisse et la traverse et sont disposés de façon à produire une force de pivotement perpendiculaire au rayon du mouvement de pivotement.

Un dispositif de ce type est connu par la demande de brevet européen N° 0054776. Ce document décrit un mode de réalisation dans lequel les moyens hydrauliques sont formés par deux vérins hydrauliques disposés de deux côtés, diamétralement opposés du corps de liaison élastique. Ces vérins fixés par leur corps au châssis agissent par leur piston latéralement sur le corps élastique. Le pivotement de la traverse s'obtient par envoi d'un fluide sous pression dans le vérin approprié et par déformation du corps élastique.

Ce dispositif connu présente l'inconvénient majeur qu'il ne permet pas de grands déplacements angulaires de la traverse.

L'invention a pour but de proposer un dispositif de commande de la direction arrière pour véhicule automobile, qui remédie à l'inconvénient de dispositifs connus et permet de grands déplacements angulaires sans que cela soit préjudiciable à la qualité du véhicule en filtrage, guidage et bruit.

Pour atteindre ce but, le dispositif de commande selon l'invention est caractérisé en ce que les moyens de vérin hydraulique comportent un seul vérin qui est incorporé au corps de liaison élastique et forme avec celui-ci un ensemble dans lequel ce corps est disposé entre la caisse ou la traverse et une partie du vérin, soit le piston soit le corps de vérin, tandis que l'autre partie du vérin est fixée à la traverse ou à la caisse.

Selon une caractéristique avantageuse de l'invention, le piston du vérin est solidaire de la caisse et le corps du vérin est solidaire du corps élastique.

Selon une autre caractéristique avantageuse de l'invention, le corps élastique est formé par un cylindre creux en un matériau élastomère qui entoure coaxialement le corps du vérin et est fixé par ses surfaces cylindriques interne et externe respectivement au corps du vérin et à la traverse.

Selon encore une autre caractéristique avantageuse de l'invention, le piston du vérin est solidarisé par ses deux extrémités d'une chape fixée à la caisse.

Selon encore une autre caractéristique avantageuse de l'invention, le cylindre en matériau élastomère est coaxialement inséré dans un cylindre de support formé de deux éléments en forme de semi-cylindre assemblables par des moyens de serrage et dont l'un est solidaire de la traverse.

Selon encore une autre caractéristique avantageuse de l'invention, le vérin est à effet différentiel, le piston présente dans sa partie médiane un collet séparant deux moitiés de pistons de diamètre extérieur différents de façon à former dans le vérin deux chambres de sections utiles inégales et alimentées séparément, la chambre de plus petite section étant maintenue à une pression constante tandis que la chambre de plus grande section étant alimentée par un fluide dont la pression est contrôlée par un régulateur hydraulique.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention, et dans lesquels :

la figure 1 est une vue schématique d'un dispositif de commande de direction arrière d'un véhicule automobile selon la présente invention, la partie arrière du véhicule étant illustrée en une vue de dessus ;

la figure 2 est une vue détaillée en coupe axiale à plus grande échelle le long de la ligne II-II de la figure 1 ; et

la figure 3 est une vue détaillée en coupe, à plus grande échelle, le long de la ligne III-III de la figure 1.

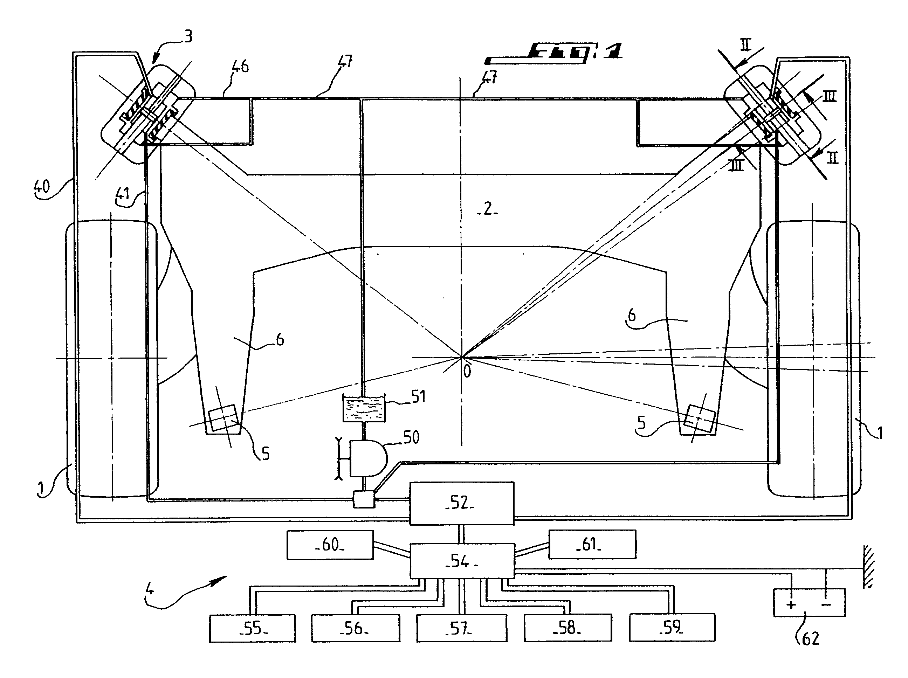

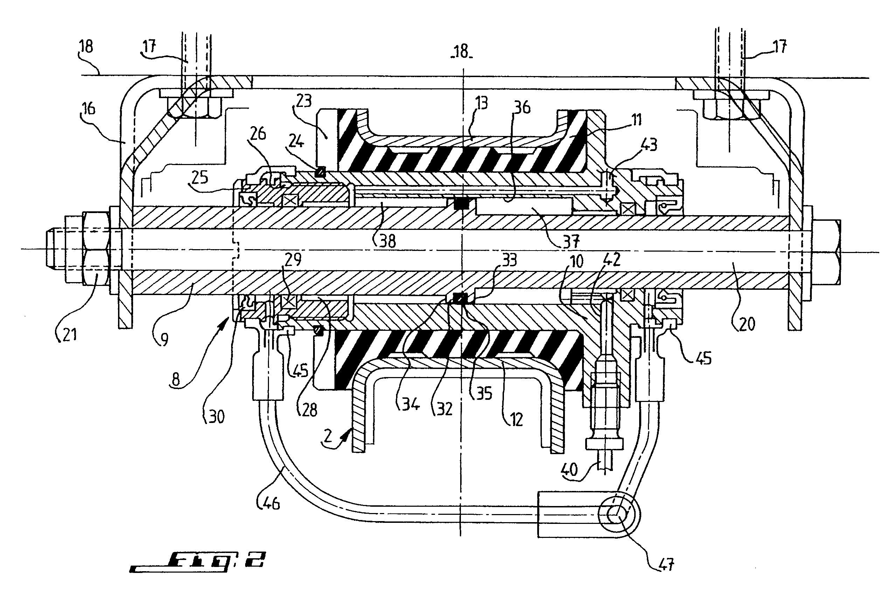

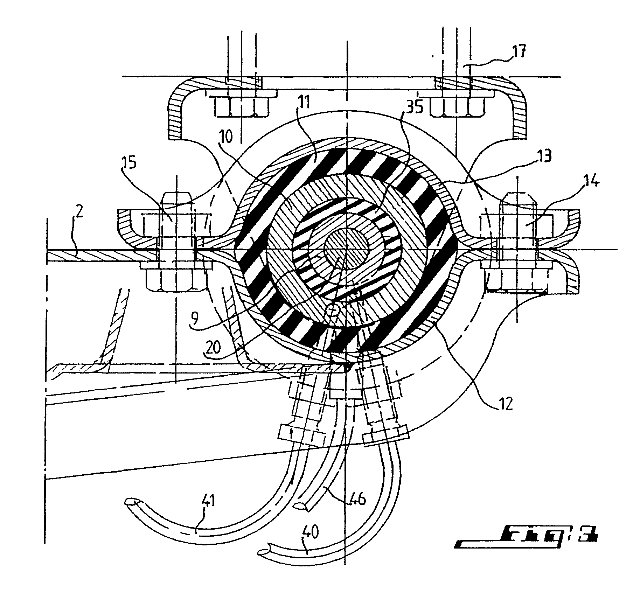

La figure 1 illustre la partie arrière d'un véhicule automobile, ou on reconnaît les roues arrière 1 et une traverse 2 de l'essieu arrière qui est monté pivotant sur le châssis (non spécialement représenté) autour d'un point 0 situé au croisement de l'axe longitudinal du véhicule et de l'axe des deux roues 1. Ce pivotement est produit par deux ensembles 3 de liaison élastique vérin hydraulique incorporé interposés entre la traverse et le châssis. Ces ensembles 3 sont situés de part et d'autre de l'axe longitudinal du véhicule et sont représentés de façon détaillée aux figures 2 et 3. La figure 1 montre également sous forme d'un schéma bloc le système hydraulique d'alimentation en fluide sous pression des vérins des ensembles 3. Ce système indiqué de façon générale par le chiffre de référence 4 sera décrit plus loin. On constate en outre que la traverse d'essieu 2 est reliée à la caisse par deux liaisons élastiques 5 disposées en arrière des ensembles 3 sur des bras longitudinaux 6 de la traverse, de part et d'autre de l'axe longitudinal du véhicule.

En se reportant aux figures 2 et 3, on constate qu'un ensemble 3 de liaison élastique entre le châssis et la traverse d'essieu 2, selon l'invention, comprend essentiellement un vérin hydraulique 8 dont le piston ou tige de piston et le corps portent les références respectivement 9 et 10 et qui est monté coaxialement dans le cylindre creux 11 en un matériau élastomère. Ce cylindre 11 constitue une articulation élastique par l'intermédiaire de laquelle le corps du vérin 10 est solidaire de la traverse d'essieu 2. Pour assurer le maintien du cylindre élastique 11 sur la traverse 2 cette dernière présente à son extrémité un logement semi-cylindrique 12 dans laquelle s'engage coaxialement le cylindre 11. Ce dernier, avec le vérin 8 incorporé est immobilisé dans ce logement à l'aide d'un chapeau 13 de forme semi-cylindrique qui sera posé sur le cylindre 11 et fixé à la traverse par des vis de serrage 14 aux deux côtés du logement semi-cylindrique 12. Ce dernier et le chapeau 13 forment ainsi un cylindre de support dans lequel le cylindre élastique 11 est coaxialement inséré.

La tige de piston 9 du vérin est fixée à ses deux extrémités à une chape 16 qui est fixée par des vis 17 au châssis indiqué schématiquement en 18.

Plus précisément le piston 9 et sa partie formant tige sont percés par un alésage axial traversé par un boulon 20 ajusté. La fixation entre ce boulon 20 et la chape 16 se fait à l'aide d'un écrou 21. On constate encore que le cylindre d'articulation élastique 11 est maintenu sur le corps du vérin 10 au moyen d'une bride 23 immobilisée par une bague de sécurité 24 du type circlips.

Le corps 10 du vérin 8 est fermé à une extrémité par un écrou 25, l'étanchéité entre les deux pièces étant assurée par un joint 26. Cet ensemble est monté coulissant sur la tige de piston 9. Le guidage est assuré par deux paliers anti-friction 28 et l'étanchéité par deux joints composites 29 et deux joints pare-poussières 30.

La tige de piston 9 comporte dans sa partie axialement médiane, située à l'intérieur de la chambre du vérin un collet cylindrique 32 dont les faces frontales 33, 34 s'étendent radialement et présentent des superficies différentes du fait que le diamètre de la tige de piston 9 est différent des deux côtés axiaux du collet 32. Celui-ci coulisse par sa face périphérique cylindrique, pourvue dans sa zone axialement centrale d'un joint composite 35 sur la surface interne cylindrique 36 du corps de vérin 10. Par conséquent le vérin présente deux chambres annulaires 37, 38 à effet différentiel et dont les surfaces de pression respectivement 33 et 34 sont différentes. Le rapport des surfaces est de 1/2. On maintiendra constante la pression dans la chambre 32 à surface de pression ou de travail 34 plus faible, tandis que la pression dans l'autre chambre 37 est régulée. La mise en pression des deux chambres 37, 38 est réalisée du côté opposé à l'écrou 21 par deux conduites d'alimentation 40, 41 par l'intermédiaire de deux canaux coudés respectivement 42, 43 pratiqués dans le corps de vérin 10. Pour permettre le retour des fuites éventuelles on a prévu à chaque extrémité du vérin des capuchons 45 connectés à des conduites externes 46 qui débouchent dans une conduite de retour unique 47.

En se reportant à nouveau à la figure 1 on constate que le système 4 d'alimentation en fluide sous pression, plus précisément en liquide sous pression, comprend une centrale de pression 50 reliée à un réservoir de fluide 51 et à un régulateur hydraulique 52. La conduite 40 d'alimentation en fluide régulée de la chambre 37 de chaque ensemble 3 de liaison élastique, à vérin incorporé, est reliée à ce régulateur hydraulique 52, tandis que la conduite 41 de chaque ensemble 3 est reliée à la centrale de pression 50. Les conduites de retour de fuite 47 sont amenées au réservoir 51.

Le régulateur hydraulique 52 est commandé par un calculateur électronique 54 qui calcule les ordres qu'il donne au régulateur 52 à partir de paramètres représentatifs de l'état dynamique du véhicule. Ces paramètres sont mesurés par des capteurs qui transmettent un signal électrique approprié au calculateur. Ainsi on a indiqué schématiquement sur la figure 1 en 55 à 61 des capteurs destinés à fournir des paramètres relatifs aux angles du volant, à la vitesse du véhicule, aux accélérations latérales, à des vitesses de lacet, aux angles moyens des roues avant et à la position relative caisse/traverse aux côtés gauche et droit. Le calculateur électronique reçoit l'énergie électrique de la batterie indiquée en 62.

On décrira ci-après le fonctionnement du dispositif de commande selon l'invention, qui vient d'être décrit.

En position neutre le collet de piston 32 se trouve situé au milieu de sa course totale. Suivant la situation dynamique du véhicule, le calculateur électronique 54 commande en fonction de signaux que lui ont envoyé les capteurs de paramètres 55 à 61 le régulateur hydraulique 52 qui modifie la pression dans les chambres 37 des deux vérins hydrauliques 8 incorporés aux ensembles de liaison élastique 3. Pour permettre un déplacement identique, les capteurs 60, 61 mesurent la position relative de la traverse d'essieu 2 par rapport à la caisse de chaque côté (droit et gauche) et envoie l'information au calculateur 54 qui règle les pressions dans chaque chambre pour avoir une rotation correcte de l'essieu. Le cylindre en matériau élastomère 11, qui constitue l'articulation élastique, permet d'absorber les variations dues à la rotation par rapport à la position initiale lors du fonctionnement et de réaliser le filtrage horizontal et vertical et le guidage.

Il est à noter que les positions angulaires des axes de déplacement des corps de vérin 10, perpendiculairement aux rayons de pivotement de la traverse 2 permettent, lors de la conception, de définir la position idéale du centre de rotation de l'ensemble.

Des nombreuses variantes peuvent être apportées au dispositif qui vient d'être décrit en se reportant aux figures. Ainsi la chape 16 pourrait être fixée à la caisse de toute autre façon amovible ou fixe, par exemple par soudure. Le chapeau de fixation 14 pourrait être intégré à la traverse 2 en utilisant une articulation élastique en deux parties. La bride d'immobilisation 23 de l'articulation élastique 11 pourrait être intégrée au corps du vérin en utilisant une articulation élastique fendue.

**Revendications**

1. Dispositif de commande de direction arrière pour véhicule automobile à quatre roues directrices, dont la traverse de l'essieu arrière est montée pivotante par rapport à la caisse autour d'un point situé au croisement de l'axe longitudinal du véhicule et de l'axe des roues arrière, du type comportant à chaque extrémité de la traverse des moyens de vérin hydraulique de commande dudit mouvement de pivotement, qui agissent sur un corps de liaison élastique entre la caisse et la traverse et sont disposés de façon à produire une force de pivotement perpendiculaire aux rayons du mouvement de pivotement, et caractérisé en ce que les moyens de vérin hydraulique comportent un seul vérin (8) qui est incorporé au corps de liaison élastique (11) et forme avec celui-ci un ensemble dans lequel ce corps (11) est disposé entre la caisse (18) ou la traverse (2) et une partie du vérin, soit le piston (9), soit le corps de vérin (10), tandis que l'autre partie du vérin est fixée à la traverse (2) ou la caisse (18).

2. Dispositif selon la revendication 1, caractérisé en ce que le piston (9) du vérin (8) est solidaire de la caisse (18) et le corps du vérin (10) est solidaire du corps élastique (11).

3. Dispositif selon l'une des revendications 1 ou 2, caractérisé en ce que le corps élastique (11) est formé par un cylindre creux en un matériau élastomère qui entoure coaxialement le corps de vérin (10) et est fixé par ses surfaces cylindriques interne et externe respectivement au corps du vérin (10) et à la traverse (2).

4. Dispositif selon l'une des revendications précédentes, caractérisé en ce que le piston (9) du vérin est solidarisé par ses deux extrémités à une chape (16) fixée à la caisse (18).

5. Dispositif selon l'une des revendications 3 ou 4, caractérisé en ce que le cylindre en matériau élastomère (11) est coaxialement inséré dans un cylindre de support formé de deux éléments (12, 13) en forme de semi-cylindre assemblés par des moyens de serrage (14) et dont l'un (12) est solidaire de la traverse (2).

6. Dispositif selon l'une des revendications précédentes, caractérisé en ce que le vérin (8) est à effet différentiel, le piston (9) présente dans sa partie médiane un collet (32) séparant deux moitiés de piston de diamètre extérieur différent de façon à former dans le vérin deux chambres de sections utiles (33, 34) inégales et alimentées séparément, la chambre (38) de petite section (34) étant maintenue à une pression constante tandis que la chambre (37) de plus grande section (33) étant alimentée par un fluide dont la pression est contrôlée par un régulateur hydraulique (52).

7. Dispositif selon l'une des revendications précédentes, caractérisé en ce que le collet (32) du piston comporte dans sa partie axialement médiane un joint (35) haute pression.

8. Dispositif selon l'une des revendications précédentes, caractérisé en ce que l'essieu arrière (2) est relié à la caisse en outre par deux liaisons élastiques (5) disposée en arrière des deux ensembles à vérin incorporé (3).

Fig. 1

FIG. 2

EP 0 418 115 A1

Fig.3

7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-3437715 (NISSAN)<br>* page 20, ligne 28 - page 21, ligne 16; figure 8 *<br>--- | 1 | B62D7/14<br>B60G7/02 |
| A | FR-A-2596010 (PEUGEOT ET AL.)<br>* abrégé; figures *<br>--- | 1 | |
| A | PATENT ABSTRACTS OF JAPAN<br>vol. 12, no. 222 (M-712)(3069) 24 juin 1988,<br>& JP-A-63 20275 (MAZDA) 27 janvier 1988,<br>* le document en entier *<br>--- | 1 | |
| A | EP-A-0096345 (NISSAN)<br>* abrégé; figures 4, 6 *<br>--- | 1 | |
| D,A | EP-A-0054776 (NISSAN)<br>* abrégé; figure 5 *<br>----- | 1 | |
| | | | DOMAINES TECHNIQUES RECHERCHES (Int. Cl.5) |
| | | | B62D<br>B60G |

Le présent rapport a été établi pour toutes les revendications

| Lieu de la recherche | Date d'achèvement de la recherche | Examinateur |
|---|---|---|
| BERLIN | 10 DECEMBRE 1990 | KRIEGER, P |